# NEUE EUROPÄISCHE PATENTSCHRIFT

(11) **EP 3 310 543 B2**
(45) Veröffentlichungstag und Bekanntmachung des Hinweises auf die Entscheidung über den Einspruch: **08.06.2022**
(45) Hinweis auf die Patenterteilung: 26.09.2018
(21) Anmeldenummer: 17740634.5
(22) Anmeldetag: 28.06.2017
(51) Int. Cl.: B29B 7/30, B29B 7/72, B29B 7/74, B29B 7/80

(54) **VORRICHTUNG UND VERFAHREN ZUM SCHÄUMEN EINES VISKOSEN MATERIALS**
DEVICE AND METHOD FOR FOAMING A VISCOUS MATERIAL
DISPOSITIF ET PROCÉDÉ DE MOUSSAGE D'UN MATÉRIAU VISQUEUX

(30) Priorität: 11.08.2016 DE 102016114898
(43) Veröffentlichungstag der Anmeldung: 25.04.2018
(73) Patentinhaber: CeraCon GmbH, 97990 Weikersheim (DE)
(72) Erfinder: KUKLA, Frank, 97082 Würzburg (DE); KRÄMER, Erich, 97285 Röttingen (DE)
(74) Vertreter: advotec.
(86) Internationale Anmeldenummer: PCT/EP2017/066042
(87) Internationale Veröffentlichungsnummer: WO 2018/028876

(56) Entgegenhaltungen:
- EP-A1- 0 259 689
- EP-A1- 0 470 387
- EP-A1- 0 974 391
- EP-A1- 1 591 219
- EP-A2- 0 205 328
- EP-A2- 0 723 843
- WO-A1-97/47453
- DD-A1- 133 642
- DE-A1- 3 414 877
- DE-B3-102012 209 517
- DE-T3- 69 505 999
- JP-A- H05 123 555
- JP-A- S57 144 732
- US-A1- 2009 236 025

## Beschreibung

Die Erfindung betrifft eine Vorrichtung und ein Verfahren zum Schäumen eines viskosen Materials gemäß der Lehre der unabhängigen Hauptansprüche.

Die gattungsgemäß hergestellten Schäume werden beispielsweise, jedoch keineswegs ausschließlich, verwendet, um geschäumte Dichtungen auf abzudichtenden Bauteilen in frei konfigurierbarer Geometrie auftragen zu können. Dabei sind zum einen sogenannte Zweikomponenten-Schäume bekannt, bei denen zwei chemisch miteinander reaktive Bestandteile miteinander vermischt werden und durch die chemische Reaktion einen Schaum bilden. Nachteilig an diesen Zweikomponenten-Dichtungssystemen ist es, dass bei Prozessunterbrechungen der chemische Prozess nur mit großen Schwierigkeiten unterbrochen werden kann. Deshalb ist es bei solchen Zweikomponenten-Systemen nach Betriebsunterbrechungen regelmäßig notwendig, die entsprechende Vorrichtung aufwendig zu reinigen.

Zur Vermeidung dieser Nachteile von Zweikomponenten-Systemen sind auch sogenannte Einkomponenten-Systeme zum Schäumen von viskosen Materialien bekannt. Die EP 0 286 015 B1 beschreibt ein solches gattungsgemäßes Verfahren für ein Einkomponenten-System. Grundlage dieses Verfahrens ist die Mischung eines viskosen Materials mit einem unter hohem Druck stehenden Gas. Nach der Zuführung des Gases in das viskose Material wird das Gemisch in einer Mischeinrichtung sehr intensiv durchgemischt, um für eine ausreichend feine Verteilung des Gases im viskosen Material zu sorgen. Anschließend wird das Gemisch dann unter hohem Druck ausgebracht und bei der Ausbringung druckentlastet. Durch die Druckentlastung wird erreicht, dass die im viskosen Material verteilten Gasblasen aufgrund der Druckdifferenz nach der Druckentlastung expandieren und dadurch das viskose Material physikalisch aufschäumen. Nachteilig an diesem Verfahren ist es, dass die Größe und Verteilung der Gasblasen im viskosen Material einer statistischen Verteilung entsprechen, so dass das viskose Material neben sehr sehr kleinen Gasblasen auch relativ große Gasblasen enthalten kann, was zu Unregelmäßigkeiten bei der Schaumbildung führt. Durch die statistische Verteilung der Gasblasen nach Qualität und Quantität wird eine prozesssichere Steuerung bei der Herstellung des gewünschten Schaums erschwert.

Die JP H05 123555A, die JP S57 144732 A, die US 2009/236025 und die EP 0 723 843 A2 offenbaren jeweils eine Vorrichtung zum Schäumen von viskosem Material. Das viskose Material selbst steht dabei lediglich unter Niederdruck und wird beispielsweise mit einem Druck von 1 bar in einer Förderleitung zu der Mündungsstelle gefördert, an der das Gas injiziert wird. Dies hat den Nachteil, dass der Schäumeffekt relativ gering ist.

Aufgabe der vorliegenden Erfindung ist es deshalb, eine Vorrichtung und ein Verfahren zum Schäumen eines viskosen Materials vorzuschlagen, mit der bzw. dem die Prozesssicherheit bei der Herstellung des Schaums durch Verbesserung des Schäumeffekts erhöht werden kann.

Diese Aufgabe wird durch eine Vorrichtung und ein Verfahren nach der Lehre der unabhängigen Hauptansprüche gelöst.

Die Vorrichtung beruht gattungsgemäß auf dem Grundgedanken, dass das Gas, das in das viskose Material eingebracht werden soll, mittels eines Gasinjektionsventils in das viskose Material injiziert wird. Durch die Injektion der Gasblasen unter Verwendung eines Gasinjektionsventils kann die Qualität und Quantität der Gasblasen prozesssicher gesteuert werden. Die Abweichung der Größe und Verteilung der Gasblasen liegt durch die gezielte Injektion des Gases unter Verwendung des Gasinjektionsventils innerhalb sehr enger Grenzen, so dass ein hochqualitativer Schaum mit sehr gleichmäßigen Materialeigenschaften herstellbar ist.

Das Gemisch aus viskosem Material und den injizierten Gasblasen muss zum Aufschäumen der Gasblasen an der Ausströmvorrichtung druckentlastet werden. Erfolgt die Druckentlastung beispielsweise dadurch, dass die Mischung aus viskosem Material und Gasblasen mittels der Ausströmvorrichtung auf ein Werkstück unter Normalatmosphäre aufgebracht werden wird, so muss der Druck des viskosen Materials unter darin eingemischten Gasblasen vor der Ausströmvorrichtung deutlich oberhalb des Normaldrucks von 1 bar liegen. Um einen guten Schaumeffekt zu ermöglichen, sollte der Druck des Gemischs aus viskosem Material und injizierten Gasblasen deutlich oberhalb des Normaldrucks von 1 bar liegen. Erfindungsgemäß ist es deshalb vorgesehen, im Hochdruckbereich zu arbeiten und die Gasblasen unter Hochdruck in das bereits unter Hochdruck stehende viskose Material zu injizieren. Erfindungsgemäß wird das viskose Material mit einem Förderdruck von 80 bar bis 120 bar, mit der Fördereinrichtung durch die erste Förderleitung zur Mündungsstelle gefördert.

Abhängig von der Anzahl von Gasinjektionsventilen und dem Querschnitt der ersten Förderleitung, in der das viskose Material beim Injizieren der Gasblasen strömt, kann es gemäß der Grundform der erfindungsgemäßen Vorrichtung ausreichen, dass die Gasblasen allein durch die Gasinjektion im viskosen Material verteilt werden. Um eine noch homogenere Verteilung der Gasblasen und gegebenenfalls auch eine Aufteilung der injizierten Gasblasen in noch kleinere Gasblasen zu erreichen, kann eine statisch oder dynamisch arbeitende Mischeinrichtung verwendet werden, die stromabwärts der Mündungsstelle, an der die Gasblasen injiziert werden, angeordnet ist. Durch das Mischen des viskosen Materials mit den injizierten Gasblasen wird das Material homogenisiert und abhängig vom gewählten Mischverfahren auch eine Verteilung der injizierten Gasblasen erreicht. Es können dabei statische Mischer Verwendung finden, die selbst keine Mischbewegung ausführen. Bei diesen statischen Mischern wird die Durchmischung durch die Fließbewegung des viskosen Materials vorbei an entsprechenden Strömungsleitelementen erreicht. Eine intensivere Homogenisierung der Gasblasen im viskosen Material kann mit dynamischen Mischern erreicht werden, bei denen das Gemisch aus Gasblasen und viskosem Material durch aktiven Antrieb eines Mischelements durchmischt wird. Insbesondere Schermischer sind zum Mischen des viskosen Materials mit den injizierten Gasblasen sehr gut geeignet, da durch die im Schermischer aufgebrachten Scherkräfte eine besonders feine Verteilung der Gasblasen erreicht wird. Der Schermischer kann dabei aus einer sich drehenden Welle mit daran befestigten Mischblättern oder Mischscheiben bestehen.

In das bereits unter Hochdruck stehende viskose Material kann dann das Gas mit einem Förderdruck von 90 bar bis 130 bar, durch die zweite Förderleitung zum Gasinjektionsventil gefördert und dort in das bereits unter Hochdruck stehende viskose Material injiziert werden. Dabei ist zu als wesentlich erkannt worden, dass zwischen dem bereits unter Hochdruck stehenden viskosen Material und dem darin zu injizierenden Gas bei der Gasinjektion eine ausreichende Druckdifferenz von mindestens 1 bar, bevorzugt im Bereich von 1 bis 20 bar, vorhanden sein muss. Vorteilhafter ist dabei eine größere Druckdifferenz, so dass bei einem Förderdruck des viskosen Materials von beispielsweise 100 bar das zu injizierende Gas einen Druck von beispielsweise 110 bar aufweisen sollte. Erfindungsgemäß ist es vorgesehen, dass das Gasinjektionsventil einen Nadelverschluss umfasst.

Erfindungsgemäß ist es vorgesehen, dass das Gasinjektionsventil einen Nadelverschlus umfasst.

Es ist als erfindungswesentlich erkannt worden, dass der Nadelverschluss des Gasinjektionsventils eine Verstellung des Hubs des Nadelverschlusses erlaubt, um dadurch die Größe der injizierten Gasblasen verändern zu können.

Weiterhin ist es besonders vorteilhaft, wenn die Bewegungsfrequenz des Nadelverschlusses verändert werden kann, um durch die Änderung der Frequenz der Nadelhübe die Anzahl der injizierten Gasblasen pro Zeit variieren zu können.

Um den Injektionsprozess der erfindungsgemäßen Vorrichtung überwachen zu können, sollten an der Vorrichtung geeignete Drucksensoren vorgesehen werden. So sollte der Druck des viskosen Materials vor der Mündungsstelle mit einem ersten Drucksensor überwacht werden können. Alternativ bzw. additiv dazu ist es weiterhin besonders vorteilhaft, wenn der Druck im Gas vor dem Gasinjektionsventil mit einem zweiten Drucksensor gemessen werden kann. Ebenfalls alternativ oder additiv dazu ist es weiterhin vorteilhaft, wenn der Druck in der Mischung aus viskosem Material und Gasblasen stromabwärts des Gasinjektionsventils mit einem dritten Drucksensor gemessen werden kann.

Im Hinblick auf eine optimierte Prozesssicherheit ist es besonders vorteilhaft, wenn an der Vorrichtung ein Regelkreis zur Regelung des an der Mündungsstelle in das viskose Material einmündenden Gasblasenstroms durch Ansteuerung des Gasinjektionsventils in Abhängigkeit eines mit einem Sensor gemessenen Messwerts vorgesehen ist. Dies bedeutet also mit anderen Worten, dass das Gasinjektionsventil als Regelglied im Regelkreis dient und die Ansteuerung des Gasinjektionsventils in Abhängigkeit eines im Regelkreis vorgesehenen Sensors entsprechend einer vorgegebenen Regelstrategie verändert wird. Beispielsweise können der Druck des viskosen Materials vor der Mündungsstelle und der Druck des Gases vor dem Gasinjektionsventil gemessen und die Stellparameter des Gasinjektionsventils in Abhängigkeit dieser beiden Sensorwerte entsprechend einer vorgegebenen Regelstrategie geregelt werden.

Um das Gemisch aus viskosem Material und Gasblasen an der Ausströmvorrichtung gleichmäßig auszubringen, ist es besonders vorteilhaft, wenn stromabwärts der Mündungsstelle zumindest eine Förderpumpe vorgesehen ist, mit der die unter Druck stehende Mischung zur Ausströmvorrichtung hin gefördert werden kann. Als Förderpumpe kann dabei beispielsweise eine Kolbenpumpe eingesetzt werden.

Insbesondere bei Verwendung von Kolbenpumpen als Förderpumpe zur Förderung des Gemischs aus viskosem Material und Gasblasen zur Ausströmvorrichtung ist es besonders vorteilhaft, wenn stromabwärts der Mündungsstelle nicht nur eine, sondern zumindest zwei Förderpumpen in parallelen Leitungsabschnitten vorgesehen sind. Mit den beiden parallel zueinander angeordneten Förderpumpen kann dann die unter Druck stehende Mischung aus viskosem Material und Gasblasen abwechselnd zur Ausströmvorrichtung gefördert werden, so dass insbesondere auch bei Erreichen der Endlage einer Kolbenpumpe der Förderstrom nicht abreißt, sondern das Gemisch gleichmäßig zur Ausströmvorrichtung gefördert wird.

Als Ausströmvorrichtung zur Verwendung in der erfindungsgemäßen Vorrichtung haben sich insbesondere Nadelverschlussdüsen als besonders geeignet erwiesen. Diese sollten bevorzugt pneumatisch angetrieben sein. Derartige Nadelverschlussdüsen erlauben eine prozesssichere und geregelte Ausdosierung der Mischung aus viskosem Material und Gasblasen.

Gemäß dem gattungsgemäßen Verfahren wird das unter einem Förderdruck stehende Gas mittels eines Gasinjektionsventils in das unter einem Förderdruck stehende viskose Material injiziert. Die dadurch gebildete Mischung aus viskosem Material und Gasblasen wird dann stromabwärts der Mündungsstelle an eine Ausströmvorrichtung unter Druckentlastung ausgebracht, so dass das viskose Material durch Expansion der darin eingemischten Gasblasen durch die Druckentlastung aufschäumt.

Der Förderdruck des viskosen Materials zur Mündungsstelle hin, an der die Gasblasen mittels des Gasinjektionsventils injiziert werden, liegt erfindungsgemäß bei 80 bar bis 120 bar.

Zur Erhöhung der gleichmäßigen Verteilung der Gasblasen im viskosen Material ist es vorteilhaft, wenn die Mischung aus viskosem Material und Gasblasen nach dem Injizieren der Gasblasen und vor dem Ausströmen mit einer Mischeinrichtung homogenisiert wird.

Das in das viskose Material injizierte Gas muss ebenfalls unter Hochdruck stehen, wobei der Gasdruck mindestens 1 bar höher sein muss als der Förderdruck des viskosen Materials, da ansonsten eine Gasinjektion nicht möglich ist. Bei der erfindungsgemäßen Hochdruckverarbeitung weist das Gas einen Förderdruck von 90 bar bis 130 bar, aufweist.

Die Druckdifferenz zwischen dem Förderdruck des viskosen Materials einerseits und dem Förderdruck des Gases andererseits muss erfindungsgemäß mindestens 1 bar betragen, um eine prozesssichere Injektion der Gasblasen in das viskose Material zu ermöglichen. Erfindungsgemäß ist es vorgesehen, dass das Gasinjektionsventil einen Nadelverschluss umfasst.

Im Hinblick auf eine prozesssichere Steuerung bzw. Regelung des Injektionsprozesses ist es erfindungsgemäß, dass die Größe der Gasblasen während des Injizierens der Gasblasen verändert werden kann. Dies kann durch Änderung des Hubs eines Nadelverschlusses im Gasinjektionsventil erfolgen. Alternativ oder additiv dazu kann die Größe der Gasblasen während des Injizierens der Gasblasen auch durch die Änderung der Druckdifferenz zwischen dem ersten Förderdruck im viskosen Material und dem zweiten Förderdruck im Gas verändert werden.

Weiterhin ist es besonders vorteilhaft, wenn die Anzahl der Gasblasen pro Zeit während des Injizierens der Gasblasen verändert werden kann. Dies kann beispielsweise durch Änderung der Hubfrequenz des Nadelverschlusses in einem Gasinjektionsventil erreicht werden.

Die höchste Prozesssicherheit bei der Erzeugung des gewünschten Schaums wird erreicht, wenn die Injektion der Gasblasen mit dem Gasinjektionsventil in einem Regelkreis in Abhängigkeit zumindest eines mit einem Sensor gemessenen Messwerts verändert wird.

Als Sensoren können dabei Sensoren zur Messung des Drucks im viskosen Material bzw. Sensoren zur Messung des Drucks im Gas und/oder Sensoren zur Messung des Drucks in der Mischung aus viskosem Material und Gas eingesetzt werden.

Welche Art von viskosem Material für das erfindungsgemäße Verfahren verwendet wird, ist grundsätzlich beliebig und hängt von den Anforderungen an das zu schäumende Material ab. Im Hinblick auf die Verarbeitbarkeit ist es erfindungsgemäß vorgesehen, dass die Injektion der Gasblasen mit dem Gasinjektionsventil bei einem Druck von 80 bar bis 120 bar erfolgt, wobei als viskoses Material ein Härter-Pastenmaterial vom Einkomponententyp verwendet wird. Das Härter-Pastenmaterial sollte dabei bei 20° C eine Viskositätscharakteristik aufweisen, die innerhalb einer von den Punkten A, B, C und D definierten Zone liegt. Der Punkt A der vorzugswürdigen Viskositätszone zeigt dabei bei einer Schergeschwindigkeit von 0,43 s⁻¹ eine scheinbare Viskosität von 5 Pa s auf. Der Punkt B weist bei einer Schergeschwindigkeit von 0,43 s⁻¹ eine scheinbare Viskosität von 3000 Pa s auf. Der Punkt C weist bei einer Schergeschwindigkeit von 783 s⁻¹ eine scheinbare Viskosität von 2 Pa s und der Punkt D weist bei einer Schergeschwindigkeit von 783 s⁻¹ eine scheinbare Viskosität von 200 Pa s auf. Die angegebenen Viskositätswerte können nach der Maßgabe der DIN EN ISO 3219 bestimmt werden.

Verschiedene Ausführungsformen der Erfindung sind in den Zeichnungen schematisch dargestellt und werden nachfolgend beispielhaft erläutert.

Es zeigen:
- **Fig. 1**: eine erste Ausführungsform einer erfindungsgemäßen Vorrichtung in schematisierter Prinzipdarstellung;
- **Fig. 2**: eine zweite Ausführungsform einer erfindungsgemäßen Vorrichtung in schematisierter Prinzipdarstellung;
- **Fig. 3**: eine dritte Ausführungsform einer erfindungsgemäßen Vorrichtung in schematisierter Prinzipdarstellung.

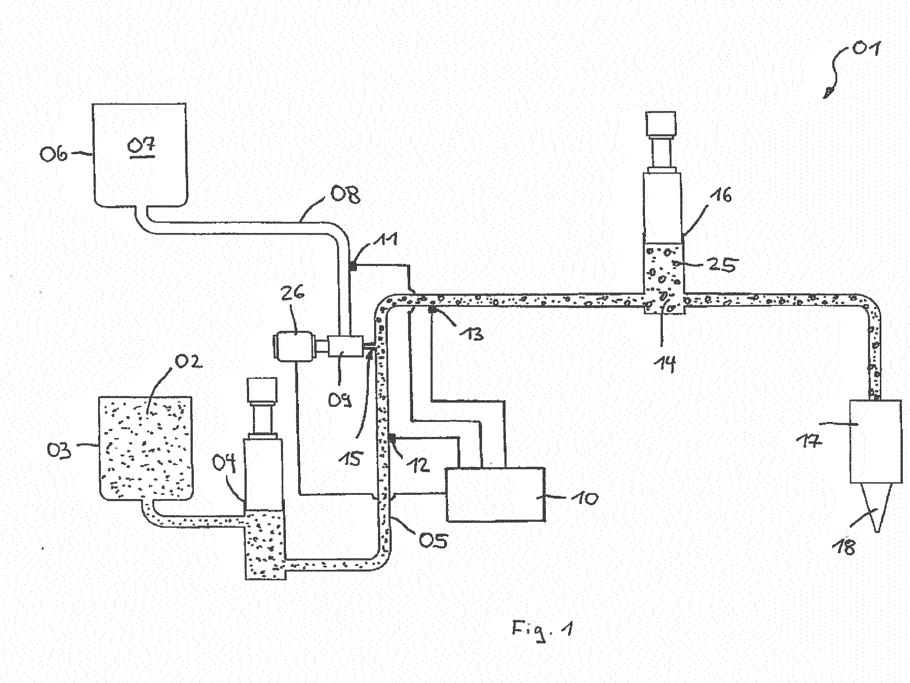

**Fig. 1** stellt eine erste erfindungsgemäße Vorrichtung 01 zum Schäumen eines viskosen Materials im Prinzip dar. Das viskose Material 02 wird aus einem Behälter 03 unter Verwendung einer Fördereinrichtung 04, nämlich einer Kolbenpumpe, durch eine erste Förderleitung 05 gepumpt. Das viskose Material 02 steht dabei in der Förderleitung 05 unter einem Druck von 100 + - 20 bar.

In einem Behälter 06 befindet sich Gas 07, beispielsweise Luft. Das Gas 07 wird mittels eines nicht dargestellten Hochdruckkompressors unter Hochdruck von beispielsweise 110 + - 20 bar gesetzt. Der Gasdruck des Gases 07 wird dabei jeweils so gewählt, dass der Gasdruck mindestens 1 bar größer ist als der Förderdruck des viskosen Materials 02 in der Förderleitung 05. Durch eine zweite Förderleitung 08 gelangt das Gas 07 zu einem Gasinjektionsventil 09 mit Nadelverschluss. Der Nadelverschluss des Gasinjektionsventils wird dabei durch eine Regeleinrichtung 10 geregelt angesteuert. Die Regeleinrichtung 10 wertet dabei in einem Regelkreis die Messwerte der Sensoren 11, 12 und 13 aus, mit denen der Druck des Gases 07 in der zweiten Förderleitung 08 bzw. der Druck des viskosen Materials 02 in der Förderleitung 05 bzw. der Druck der Mischung 14 gemessen werden kann. Abhängig von diesen Messwerten wird der Antrieb 26 des Nadelverschlusses im Gasinjektionsventil 09 von der Regeleinrichtung 10 angesteuert, um den Gasinjektionsprozess entsprechend der voreingestellten Sollwerte zu regeln.

Durch Gasinjektion werden an der Mündungsstelle 15, an der die zweite Förderleitung 08 in die erste Förderleitung 05 einmündet, durch Betrieb des Gasinjektionsventils 09 Gasblasen 25 in definierter Größe und Anzahl in das viskose Material 02 injiziert, um dadurch die Mischung 14 aus Gasblasen 25 und viskosem Material 02 zu erzeugen. In den Zeichnungen sind die Gasblasen überproportional vergrößert dargestellt, um das Verständnis der Erfindung zu erleichtern.

Durch Betrieb einer Förderpumpe 16 wird die Mischung aus viskosem Material 02 und Gasblasen 25 zu einer Ausströmvorrichtung 17 mit einer pneumatisch angetriebenen Nadelverschlussdüse 18 gefördert, wo die Mischung 14 unter Druckentlastung ausdosiert und auf ein Werkstück aufgebracht werden kann. Die ausdosierte Mischung 14 schäumt dabei nach Verlassen der Nadelverschlussdüse 18 auf, da die in der Mischung 14 enthaltenen Gasblasen 25 durch die Druckentlastung in der Normalatmosphäre stark expandieren.

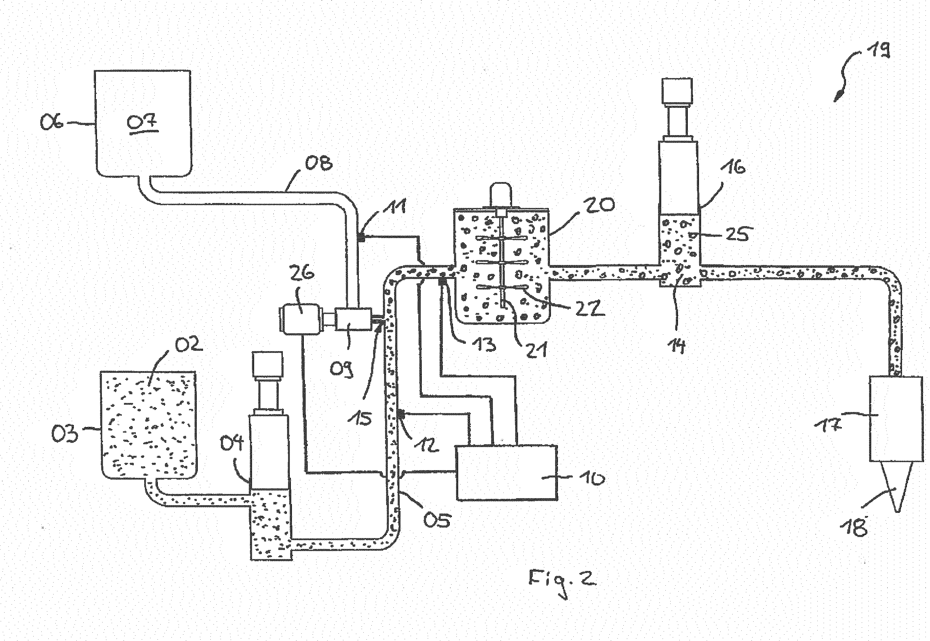

**Fig. 2** zeigt eine zweite Vorrichtung 19 zum Aufschäumen des viskosen Materials 02, die weitgehend mit der Vorrichtung 01 übereinstimmt. Zusätzlich zur Vorrichtung 01 umfasst die Vorrichtung 19 eine Mischeinrichtung 20, die stromabwärts der Mündungsstelle 15 angeordnet ist, um die Mischung 14 aus viskosem Material 02 und die darin injizierten Gasblasen 25 zu homogenisieren und die Gasblasen 25 zu zerkleinern. Die Mischeinrichtung 20 weist dabei eine Antriebswelle 21 auf, mit der die Mischblätter 22 rotatorisch angetrieben werden. Die Mischeinrichtung 20 wird dabei von der Mischung 14 parallel zur Rotationsebene der Mischblätter 22 angeströmt.

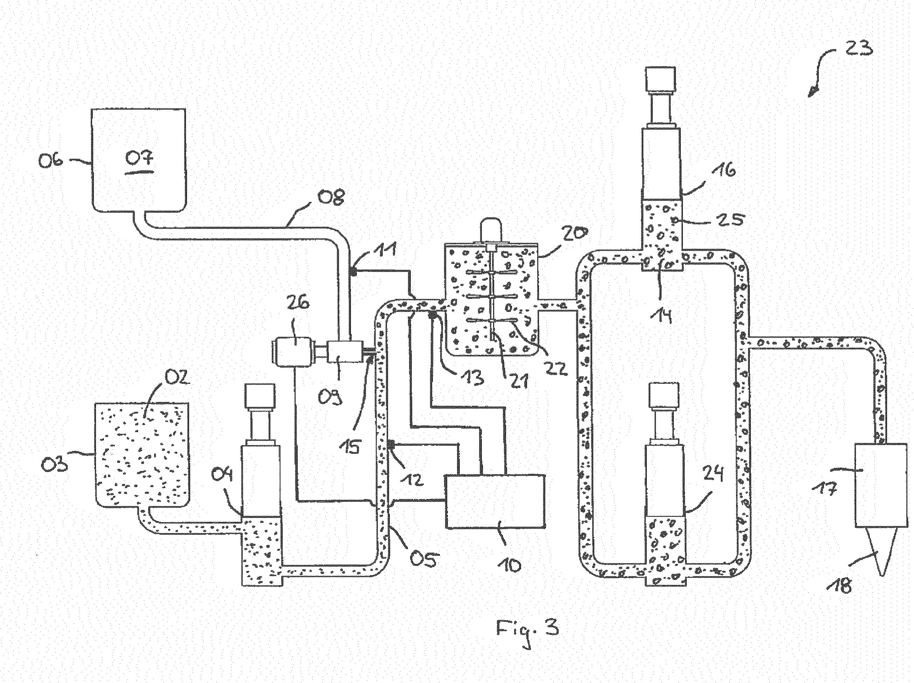

**Fig. 3** zeigt eine Vorrichtung 23 zum Schäumen des viskosen Materials 02, die weitgehend der Vorrichtung 19 entspricht. Zusätzlich zur Vorrichtung 19 umfasst die Vorrichtung 23 eine zweite Förderpumpe 24, so dass die Förderpumpen 16 und 24 jeweils in parallel zueinander verlaufenden Leitungsabschnitten angeordnet sind. Durch abwechselnden Betrieb der Förderpumpen 16 und 24 kann die Mischung aus viskosem Material 02 mit den darin injizierten Gasblasen 25 unterbrechungsfrei zur Ausströmvorrichtung 17 gefördert werden.

## Patentansprüche

1. Vorrichtung (01, 19, 23) zum Schäumen eines viskosen Materials (02), wobei das viskose Material (02) mit einer ersten Fördereinrichtung (04) unter einem ersten Förderdruck durch eine erste Förderleitung (05) gefördert wird, und wobei ein Gas (07) unter einem zweiten Förderdruck durch eine zweite Förderleitung (08) gefördert wird, und wobei die zweite Förderleitung (08) an einer Mündungsstelle (15) in die erste Förderleitung (05) einmündet, und wobei stromabwärts der Mündungsstelle (15) eine Ausströmvorrichtung (17) zum druckentlastenden Ausströmen der Mischung (14) aus viskosem Material (02) und Gas (07) vorgesehen ist, und wobei an der Mündungsstelle (15) ein Gasinjektionsventil (09) angeordnet ist, wobei das Gasinjektionsventil (09) Gasblasen (25) in das viskose Material (02) injizieren kann,
**dadurch gekennzeichnet,**
**dass** die Fördereinrichtung (04) das viskose Material mit einem Förderdruck von 80 bar bis 120 bar durch die erste Förderleitung (05) zur Mündungsstelle (15) fördern kann, dass das Gas (07) mit einem Förderdruck von 90 bar bis 130 bar durch die zweite Förderleitung (08) zum Gasinjektionsventil (09) gefördert werden kann, wobei die Druckdifferenz zwischen dem Förderdruck des viskosen Materials (02) und dem Förderdruck des Gases (07) mindestens 1 bar ist, dass das Gasinjektionsventil (09) einen Nadelverschluss umfasst und dass die Größe der injizierten Gasblasen (25) durch Verstellung des Hubs des Nadelverschlusses im Gasinjektionsventil (09) und/oder dass die Größe der injizierten Gasblasen (25) durch Änderung der Druckdifferenz zwischen dem ersten Förderdruck im viskosen Material (02) und dem zweiten Förderdruck im Gas (07) verändert werden kann.

2. Vorrichtung nach Anspruch 1,
**dadurch gekennzeichnet,**
**dass** die Anzahl der injizierten Gasblasen (25) pro Zeit durch Änderung der Bewegungsfrequenz des Nadelverschlusses im Gasinjektionsventil (09) verändert werden kann.

3. Vorrichtung nach Anspruch 1 oder 2,
**dadurch gekennzeichnet,**
**dass** die Vorrichtung (01, 19, 23) einen ersten Drucksensor (12) zur Messung des Drucks im viskosen Material (02) vor der Mündungsstelle (15) und/oder einen zweiten Drucksensor (11) zur Messung des Drucks im Gas (02) vor dem Gasinjektionsventil (09) und/oder einen dritten Drucksensor (13) zur Messung des Drucks in der Mischung (14) aus viskosem Material (02) und Gasblasen (25) umfasst.

4. Vorrichtung nach einem der Ansprüche 1 bis 3,
**dadurch gekennzeichnet,**
**dass** an der Vorrichtung (01, 19, 23) eine Regeleinrichtung (10) zur Regelung des an der Mündungsstelle (15) in das viskose Material (02) einmündenden Stroms aus Gasblasen (25) durch Ansteuerung des Gasinjektionsventils (09) in Abhängigkeit eines mit einem Sensor (11, 12, 13) gemessenen Messwerts vorgesehen ist.

5. Vorrichtung nach einem der Ansprüche 1 bis 4,
**dadurch gekennzeichnet,**
**dass** stromabwärts der Mündungsstelle (15) zumindest eine Förderpumpe (16, 24) vorgesehen ist, mit der die unter Druck stehende Mischung (14) aus viskosem Material (02) und Gasblasen (25) zur Ausströmvorrichtung (17) gefördert werden kann.

6. Vorrichtung nach Anspruch 5,
**dadurch gekennzeichnet,**
**dass** stromabwärts der Mündungsstelle (15) zwei Förderpumpen (16, 24) in parallelen Leitungsabschnitten vorgesehen sind, mit denen die unter Druck stehende Mischung (14) aus viskosem Material (02) und Gasblasen (25) abwechselnd zur Ausströmvorrichtung (17) gefördert werden kann.

7. Vorrichtung nach einem der Ansprüche 1 bis 6,
**dadurch gekennzeichnet,**
**dass** die Ausströmvorrichtung (17) eine insbesondere pneumatisch angetriebene Nadelverschlussdüse (18) umfasst, mit der die unter Druck stehende Mischung (14) aus viskosem Material (02) und Gasblasen (25) geregelt ausdosiert werden kann.

8. Verfahren zum Schäumen eines viskosen Materials (02), wobei das viskose Material (02) unter einem ersten Förderdruck durch eine erste Förderleitung (05) gefördert wird, und wobei ein Gas (07) unter einem zweiten Förderdruck durch eine zweite Förderleitung (08) zu einer Mündungsstelle (15) gefördert wird, und wobei an der Mündungsstelle (15) die zweite Förderleitung (08) in die erste Förderleitung (05) einmündet, und wobei das Gas (07) an der Mündungsstelle (15) mit einem Gasinjektionsventil (09) in Form von Gasblasen (25) in das viskose Material (02) injiziert wird, und wobei die Mischung (14) aus viskosem Material (02) und Gasblasen (25) stromabwärts der Mündungsstelle (15) an einer Ausströmvorrichtung (17) unter Druckentlastung ausströmt und durch Expansion der Gasblasen aufschäumt,
**dadurch gekennzeichnet,**
**dass** das viskose Material (02) mit einem Förderdruck von 80 bar bis 120 bar durch die erste Förderleitung (05) zur Mündungsstelle (15) gefördert wird, dass das Gas mit einem Förderdruck von 90 bar bis 130 bar durch die zweite Förderleitung (08) zum Gasinjektionsventil (09) gefördert wird, dass das Gas (07) mit einem Überdruck von mindestens 1 bar in das viskose Material (02) injiziert wird, dass das Gasinjektionsventil (09) einen Nadelverschluss umfasst und dass die Größe der Gasblasen (25) während der Injektion der Gasblasen (25) verändert wird.

9. Verfahren nach Anspruch 8,
**dadurch gekennzeichnet,**
**dass** die Mischung (14) aus viskosem Material (02) und Gasblasen (25) vor dem Ausströmen homogenisiert wird.

10. Verfahren nach Anspruch 8 oder 9,
**dadurch gekennzeichnet,**
**dass** die Anzahl der Gasblasen (25) pro Zeit während der Injektion der Gasblasen (25) verändert wird.

11. Verfahren nach einem der Ansprüche 8 bis 10,
**dadurch gekennzeichnet,**
**dass** die Injektion der Gasblasen (25) mit dem Gasinjektionsventil (09) in einem Regelkreis in Abhängigkeit des gemessenen Drucks im viskosen Material (02) und/oder in Abhängigkeit des gemessenen Drucks im Gas (07) und/oder in Abhängigkeit des gemessenen Drucks in der Mischung (14) aus viskosem Material (02) und Gasblasen (25) geregelt wird.

12. Verfahren nach einem der Ansprüche 8 bis 11,
**dadurch gekennzeichnet,**
**dass** als viskoses Material (02) ein Härter-Pastenmaterial vom Einkomponententyp verwendet wird, und wobei das Härter-Pastenmaterial bei 20°C ein Viskositätscharakteristikum in einer Zone aufweist, die durch die Punkte A, B, C und D definiert ist, wobei der Punkt A bei einer Schergeschwindigkeit von 0,43 s⁻¹ eine scheinbare Viskosität von 5 Pa s aufweist, und wobei der Punkt B bei einer Schergeschwindigkeit von 0,43 s⁻¹ eine scheinbare Viskosität von 3000 Pa s aufweist, und wobei der Punkt C bei einer Schergeschwindigkeit von 783 s⁻¹ eine scheinbare Viskosität von 2 Pa s aufweist, und wobei der Punkt D bei einer Schergeschwindigkeit von 783 s⁻¹ ein scheinbare Viskosität von 200 Pa s aufweist.

## Claims

1. A device (01, 19, 23) for foaming a viscous material (02), said viscous material (02) being conveyed through a first conveyor pipe (05) using a first conveying means (04) at a first conveying pressure, and a gas (07) being conveyed through a second conveyor pipe (08) at a second conveying pressure, and the second conveyor pipe (08) and the first conveyor pipe (05) becoming conjoined at an opening (15), and a discharge device (17) being provided downstream of the opening (15) so as to allow a pressure-relieving discharge of the mixture (14) made up of viscous material (02) and gas (07), a gas injection valve (09) being arranged at the opening (15), said gas injection valve (09) allowing to inject gas bubbles (25) into the viscous material (02),
**characterised**
**in that** the conveying means (04) is configured such that said conveying means (04) allows to convey the viscous material to the opening (15) at a conveying pressure of 80 bar to 120 bar through the first conveyor pipe (05), in that the gas (07) is allowed to be conveyed to the gas injection valve (09) at a conveying pressure of 90 bar to 130 bar through the second conveyor pipe (08), the difference in pressure between the conveying pressure in the viscous material (02) and the conveying pressure in the gas (07) being at least 1 bar, in that the gas injection valve (09) comprises a needle valve and in that the size of the injected gas bubbles (25) is allowed to be changed by adjusting the stroke of the needle valve in the gas injection valve (09) and/or in that the size of the injected gas bubbles (25) is allowed to be changed by changing the difference in pressure between the first conveying pressure in the viscous material (02) and the second conveying pressure in the gas (07).

2. The device according to claim 1,
**characterised**
**in that** the amount of injected gas bubbles (25) per time is allowed to be changed by changing the movement frequency of the needle valve in the gas injection valve (09).

3. The device according to claim 1 or 2,
**characterised**
**in that** the device (01, 19, 23) has a first pressure sensor (12) for measuring the pressure in the viscous material (02) upstream of the opening (15) and/or a second pressure sensor (11) for measuring the pressure in the gas (07) upstream of the gas injection valve (09) and/or a third pressure sensor (13) for measuring the pressure in the mixture (14) made up of viscous material (02) and gas bubbles (25).

4. The device according to any one of the claims 1 to 3,
**characterised**
**in that** a control device (10) is provided at the device (01, 19, 23), said control device (10) allowing to control the flow of gas bubbles (25) flowing into the viscous material (02) at the opening (15) by controlling the gas injection valve (09) as a function of a measurement measured using a sensor (11, 12, 13).

5. The device according to any one of the claims 1 to 4,
**characterised**
**in that** at least one conveyor pump (16, 24), by means of which the pressurised mixture (14) made up of viscous material (02) and gas bubbles (25) is allowed to be conveyed to the discharge device (17), is provided downstream of the opening (15).

6. The device according to claim 5,
**characterised**
**in that** two conveyor pumps (16, 24), which allow alternately conveying the pressurised mixture (14) made up of viscous material (02) and gas bubbles (25) to the discharge device (17), are provided downstream of the opening (15) in parallel pipe sections.

7. The device according to any one of the claims 1 to 6,
**characterised**
**in that** the discharge device (17) has a needle valve nozzle (18) being in particular pneumatically driven, by means of which the pressurised mixture (14) made up of viscous material (02) and gas bubbles (25) is allowed to be dosed in a controlled manner.

8. A method for foaming a viscous material (02), said viscous material (02) being conveyed at a first conveying pressure through a first conveyor pipe (05), and a gas (07) being conveyed to an opening (15) at a second conveying pressure through a second conveyor pipe (08), and the second conveyor pipe (08) and the first conveyor pipe (05) becoming conjoined at the opening (15), and said gas (07) being injected into the viscous material (02) at the opening (15) in the form of gas bubbles (25) using a gas injection valve (09), and said mixture (14) made up of viscous material (02) and gas bubbles (25) being discharged downstream of the opening (15) at a discharge device (17), thus relieving pressure, and being foamed by expansion of the gas bubbles,
**characterised**
**in that** the viscous material (02) is conveyed to the opening (15) at a conveying pressure of 80 bar to 120 bar through the first conveyor pipe (05), in that the gas is conveyed to the gas injection valve (09) at a conveying pressure of 90 bar to 130 bar through the second conveyor pipe (08), in that the gas (07) is injected into the viscous material (02) at an excess pressure of at least 1 bar, in that the gas injection valve (09) comprises a needle valve and in that the size of the gas bubbles (25) is changed while the gas bubbles (25) are injected.

9. The method according to claim 8,
**characterised**
**in that** the mixture (14) made up of viscous material (02) and gas bubbles (25) is homogenised before being discharged.

10. The method according to claim 8 or 9,
**characterised**
**in that** the amount of gas bubbles (25) per time is changed while the gas bubbles (25) are injected.

11. The method according to any one of claims 8 to 10,
**characterised**
**in that** the injection of the gas bubbles (25) using the gas injection valve (09) is controlled in a control loop as a function of the measured pressure in the viscous material (02) and/or as a function of the measured pressure in the gas (07) and/or as a function of the measured pressure in the mixture (14) made up of viscous material (02) and gas bubbles (25).

12. The method according to any one of the claims 8 to 11,
**characterised**
**in that** a hardener paste material of the single-component type is used as a viscous material (02), said hardener paste material having a viscosity characteristic at 20 °C in a zone defined by the points A, B, C and D, point A having a perceived viscosity of 5 Pa·s at a shear rate of 0.43 s⁻¹, point B having a perceived viscosity of 3,000 Pa·s at a shear rate of 0.43 s⁻¹, point C having a perceived viscosity of 2 Pa·s at a shear rate of 783 s⁻¹, and point D having a perceived viscosity of 200 Pa·s at a shear rate of 783 s⁻¹.

## Revendications

1. Dispositif (01, 19, 23) pour mousser un matériau visqueux (02), ledit matériau visqueux (02) étant convoyé à travers un premier tuyau d'alimentation (05) sous une première pression de refoulement au moyen d'un premier dispositif d'alimentation (04), et un gaz (07) étant convoyé à travers un deuxième tuyau d'alimentation (08) sous une deuxième pression de refoulement, ledit deuxième tuyau d'alimentation (08) débouchant dans le premier tuyau d'alimentation (05) au niveau d'une ouverture (15), un dispositif de décharge (17) étant prévu en aval de l'ouverture (15) afin de décharger le mélange (14) constitué de matériau visqueux (02) et de gaz (07) de manière à en réduire la pression, et une vanne d'injection de gaz (09) étant disposée à l'ouverture (15), ladite vanne d'injection de gaz (09) permettant d'injecter des bulles de gaz (25) dans le matériau visqueux (02),
**caractérisé**
**en ce que** le dispositif d'alimentation (04) est ajusté de telle manière que le dispositif d'alimentation (04) permet de convoyer le matériau visqueux à l'ouverture (15) à travers le premier tuyau d'alimentation (05) sous une pression de refoulement de 80 bar à 120 bar, en ce que le gaz (07) peut être convoyé à la vanne d'injection de gaz (09) à travers le deuxième tuyau d'alimentation (08) sous une pression de refoulement de 90 bar à 130 bar, la différence de pression entre la pression de refoulement dans le matériau visqueux (02) et la pression de refoulement dans le gaz (07) étant au moins 1 bar, en ce que la vanne d'injection de gaz (09) comprend un robinet à pointeau et en ce que la taille des bulles de gaz (25) injectées peut être changée en ajustant la course du robinet à pointeau dans la vanne d'injection de gaz (09) et/ou en ce que la taille des bulles de gaz (25) injectées peut être changée en changeant la différence de pression entre la première pression de refoulement dans le matériau visqueux (02) et la deuxième pression de refoulement dans le gaz (07).

2. Dispositif selon la revendication 1,
**caractérisé**
**en ce que** le nombre de bulles de gaz (25) injectées par unité de temps peut être changé en changeant la fréquence de mouvement du robinet à pointeau dans la vanne d'injection de gaz (09).

3. Dispositif selon la revendication 1 ou 2,
**caractérisé**
**en ce que** le dispositif (01, 19, 23) comprend un premier capteur de pression (12) pour mesurer la pression dans le matériau visqueux (02) en amont de l'ouverture (15) et/ou un deuxième capteur de pression (11) pour mesurer la pression dans le gaz (07) en amont de la vanne d'injection de gaz (09) et/ou un troisième capteur de pression (13) pour mesurer la pression dans le mélange (14) constitué de matériau visqueux (02) et de bulles de gaz (25).

4. Dispositif selon l'une quelconque des revendications 1 à 3,
**caractérisé**
**en ce qu'**un dispositif de réglage (10) est prévu au dispositif (01, 19, 23), ledit dispositif de réglage (10) permettant de régler l'écoulement de bulles de gaz (25) s'écoulant dans le matériau visqueux (02) à l'ouverture (15) en pilotant la vanne d'injection de gaz (09) en fonction d'une valeur de mesure mesurée au moyen d'un capteur (11, 12, 13).

5. Dispositif selon l'une quelconque des revendications 1 à 4,
**caractérisé**
**en ce qu'**au moins une pompe d'alimentation (16, 24) est prévue en aval de l'ouverture (15), le mélange (14) pressurisé constitué de matériau visqueux (02) et de bulles de gaz (25) pouvant être convoyé au dispositif de décharge (17) au moyen de ladite pompe d'alimentation (16, 24).

6. Dispositif selon la revendication 5,
**caractérisé**
**en ce que** deux pompes d'alimentation (16, 24) sont prévues en des sections de tuyau parallèles en aval de l'ouverture (15), le mélange (14) pressurisé constitué de matériau visqueux (02) et de bulles de gaz (25) pouvant être convoyé au dispositif de décharge (17) en alternance au moyen desdites pompes d'alimentation (16, 24).

7. Dispositif selon l'une quelconque des revendications 1 à 6,
**caractérisé**
**en ce que** le dispositif de décharge (17) comprend une buse de robinet à pointeau (18), qui est en particulier entraînée de manière pneumatique et au moyen de laquelle le mélange (14) pressurisé constitué de matériau visqueux (02) et de bulles de gaz (25) peut être dosé de manière réglée.

8. Procédé pour mousser un matériau visqueux (02), ledit matériau visqueux (02) étant convoyé à travers un premier tuyau d'alimentation (05) sous une première pression de refoulement, et un gaz (07) étant convoyé à une ouverture (15) à travers un deuxième tuyau d'alimentation (08) sous une deuxième pression de refoulement, ledit deuxième tuyau d'alimentation (08) débouchant dans le premier tuyau d'alimentation (05) au niveau de l'ouverture (15), et ledit gaz (07) étant injecté en forme de bulles de gaz (25) dans le matériau visqueux (02) à l'ouverture (15) au moyen d'une vanne d'injection de gaz (09), et le mélange (14) constitué de matériau visqueux (02) et de bulles de gaz (25) étant déchargé à un dispositif de décharge (17) en aval de l'ouverture (15) de manière à en réduire la pression et étant moussé par une expansion des bulles de gaz,
**caractérisé**
**en ce que** le matériau visqueux (02) est convoyé à l'ouverture (15) à travers le premier tuyau d'alimentation (05) sous une pression de refoulement de 80 bar à 120 bar, en ce que le gaz est convoyé à la vanne d'injection de gaz (09) à travers le deuxième tuyau d'alimentation (08) sous une pression de refoulement de 90 bar à 130 bar, en ce que le gaz (07) est injecté dans le matériau visqueux (02) sous une pression excessive d'au moins 1 bar, en ce que la vanne d'injection de gaz (09) comprend un robinet à pointeau, et en ce que la taille des bulles de gaz (25) est changée pendant l'injection des bulles de gaz (25).

9. Procédé selon la revendication 8,
**caractérisé**
**en ce que** le mélange (14) constitué de matériau visqueux (02) et de bulles de gaz (25) est homogénéisé avant d'être déchargé.

10. Procédé selon la revendication 8 ou 9,
**caractérisé**
**en ce que** le nombre de bulles de gaz (25) par unité de temps est changé pendant l'injection des bulles de gaz (25).

11. Procédé selon l'une quelconque des revendications 8 à 10,
**caractérisé**
**en ce que** l'injection des bulles de gaz (25) au moyen de la vanne d'injection de gaz (09) est réglée dans un circuit de régulation en fonction de la pression mesurée dans le matériau visqueux (02) et/ou en fonction de la pression mesurée dans le gaz (07) et/ou en fonction de la pression mesurée dans le mélange (14) constitué de matériau visqueux (02) et de bulles de gaz (25).

12. Procédé selon l'une quelconque des revendications 8 à 11,
**caractérisé**
**en ce qu'**un agent durcissant de matériau de pâte du type de composante unique est utilisé comme matériau visqueux (02), ledit agent durcissant de matériau de pâte comprenant à 20 °C un caractéristique de viscosité dans une zone qui est définie par les points A, B, C et D, ledit point A comprenant une viscosité apparente de 5 Pa·s à une vitesse de cisaillement de 0,43 s¹, et ledit point B comprenant une viscosité apparente de 3.000 Pa·s à une vitesse de cisaillement de 0,43 s¹, et ledit point C comprenant une viscosité apparente de 2 Pa·s à une vitesse de cisaillement de 783 s¹, et ledit point D comprenant une viscosité apparente de 200 Pa·s à une vitesse de cisaillement de 783 s⁻¹.
